# EUROPEAN PATENT SPECIFICATION

(11) **EP 2 241 094 B1**
(45) Date of publication and mention of the grant of the patent: **22.05.2019**
(21) Application number: 08788873.1
(22) Date of filing: 09.07.2008
(51) Int. Cl.: H04M 1/725, H04M 1/60

(54) **SYSTEM AND METHOD FOR DETERMINING ACCESSORY TYPE**
SYSTEM UND VERFAHREN ZUR ERKENNUNG VON ZUBEHÖR
SYSTÈME ET PROCÉDÉ DE DÉTERMINATION DE TYPE D'ACCESSOIRE

(30) Priority: 30.01.2008 US 22175
(43) Date of publication of application: 20.10.2010
(73) Proprietor: Sony Mobile Communications Inc., Shinagawa-ku Tokyo 140-0002 (JP)
(72) Inventor: STAHL, Carl, S-211 21 Malmö (SE)
(74) Representative: Kraus & Weisert Patentanwälte PartGmbB
(86) International application number: PCT/IB2008/001799
(87) International publication number: WO 2009/095743

(56) References cited:
- EP-A- 0 865 188
- EP-A- 1 318 576
- WO-A-00/42798
- US-A1- 2004 204 081

## Description

### TECHNICAL FIELD OF THE INVENTION

The technology of the present disclosure relates generally to electronic devices and, more particularly, to a system and method for determining an accessory type upon establishment of a connection between an electronic device and the accessory and configuring the electronic device based on the accessory type.

WO00/42798 seems to disclose a system and method for menu title display in a wireless communication device.

EP0865188 seems to be directed to a portable phone that has a controller with an associated storage for the storage of the setting for a plurality of functions which may be set individually by the user.

US2004/204081 seems to be directed to an apparatus and method for identifying and recognizing a connection of a portable digital camera or an ear-microphone when the portable digital camera or the ear-microphone is connected to a mobile communication terminal through its single external input terminal.

EP1318576 seems to be directed to a jack-type connector for jack plugs of different number of contacts.

### BACKGROUND

Mobile and/or wireless electronic devices are becoming increasingly popular. For example, mobile telephones, portable media players and portable gaming devices are now in wide-spread use. In addition, accessories for electronic devices have become increasingly popular. Exemplary accessories include personal handsfree (PHF) devices (e.g., headsets with one or more speakers and one or more microphones to facilitate voice communications without having to hold a telephone to the user's head), music desk stands, car holders, speakers, etc.

Some accessory devices work best if the associated electronic device adjusts its operation to the accessory. For example, a PHF may output audio sounds in accordance with volume settings of the electronic device, but a music desk stand may have its own volume control that may have optimal performance if a volume setting of the electronic device is set in a particular manner. In another example, many PHFs have a speaker (or speakers) and a single microphone. Channels of an interface between the PHF and the electronic device may be configured appropriately for this typical configuration, but some PHFs have two microphones for detecting user's speech in stereo. The stereo microphone arrangement may work best if the channels of the interface, as viewed by the electronic device, were reconfigured to switch a normally audio output channel to an audio input channel.

To make these adjustments, it is advantageous if the electronic device can ascertain what type of accessory is connected and automatically adjust based on the determination of the accessory type. One conventional way of ascertaining accessory type includes communicating over a proprietary connector using, for example, serial commands. Another way of determining accessory type over a proprietary connector is resistive identification (RID). In RID, resistance across terminals of the connector indicates the accessory type to the electronic device. Alternatively, a change in resonant frequency of an oscillator caused by a capacitance of the accessory may indicate the accessory type to the electronic device. These techniques may provide the electronic device with general information about the device, such as one or many broad categories of devices to which the accessory belongs. In other situations, communication between an accessory and an electronic device may be achieved using a standardized digital interface, such as universal serial bus (USB).

But when the interface between the accessory and the electronic device is an analog interface that includes a plug of the accessory and a coordinating jack of the electronic device, there is currently not a convenient way to ascertain information about the accessory. An exemplary interface of this nature may involve a standard 2.5 mm or 3.5 mm telephone plug having three or four conductors that are dedicated to analog audio output and analog audio input.

### SUMMARY

To enhance the interaction between an electronic device and an accessory that are connected using an analog interface, the present disclosure describes an improved system and method for determining accessory type.

The object is solved by the subject matter of the independent claims. Preferred embodiments are defined in the dependent claims.

These and further features will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the scope of the claims appended hereto.

Features that are described and/or illustrated with respect to one embodiment may be used in the same way or in a similar way in one or more other embodiments and/or in combination with or instead of the features of the other embodiments.

### BRIEF DESCRIPTION OF THE DRAWINGS

FIG. 1 is a schematic front view of a mobile telephone as an exemplary electronic device that includes an accessory discovery function;
FIG. 2 is a schematic bottom view of the electronic device of FIG. 1 with an associated accessory;
FIG. 3 is a schematic block diagram of the electronic device of FIG. 1;
FIG. 4 is a flow chart representing an exemplary method of determining accessory type using the electronic deice of FIG. 1; and
FIG. 5 is a schematic diagram of a communications system in which the electronic device of FIG. 1 may operate.

### DETAILED DESCRIPTION OF EMBODIMENTS

Embodiments will now be described with reference to the drawings, wherein like reference numerals are used to refer to like elements throughout. It will be understood that the figures are not necessarily to scale.

In this document, embodiments are described primarily in the context of a mobile telephone. But it will be appreciated that the described techniques could be carried out in operational environments other than the mobile telephone. Therefore, the term electronic device, as used herein, may relate to any type of appropriate electronic equipment, examples of which include a portable radio communication device (also referred to as a mobile radio terminal), a pager, a communicator, an electronic organizer, a personal digital assistant (PDA), a smartphone, a media player (e.g., an music player and/or a video player), a gaming device and a computer.

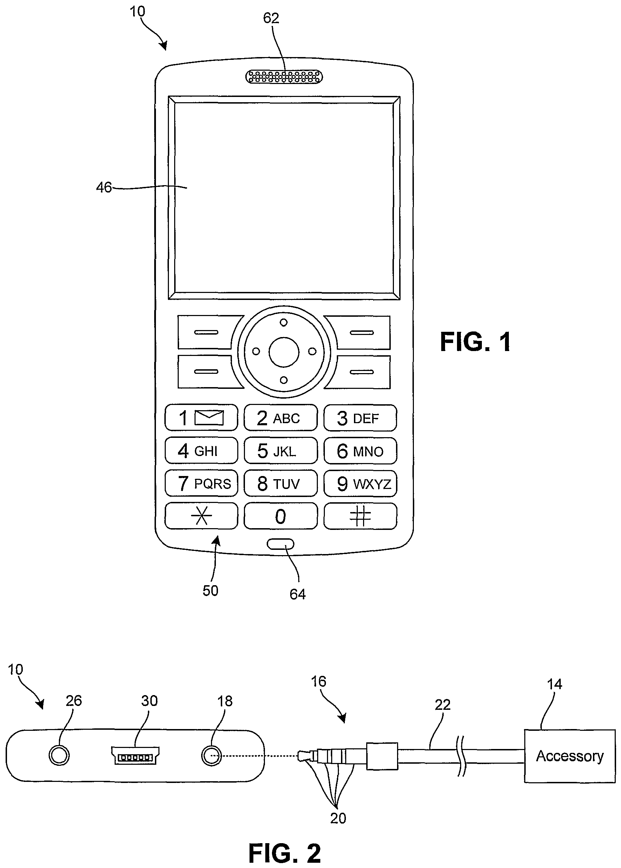

Referring initially to FIGs. 1 through 3, an electronic device is shown. The electronic device 10 includes an accessory discovery function 12 that is configured to determine information about an accessory 14 that a user connects to the electronic device 10. Upon determining information about the accessory 14, the accessory discovery function 12 may adjust settings of the electronic device 10 to optimize use of the accessory 14 with the electronic device 10.

The connection may be made using a plug 16 of the accessory 14 that is intended to establish an interface with the electronic device 10 over which analog signals are exchanged between the electronic device 10 and the accessory 14. The plug 16 may physically and electrically mate to a jack 18 of the electronic device 10. The normally exchanged analog signals may include, for example, an audio signal output by the electronic device 10 that is used to drive a speaker (not illustrated) of the accessory 14. Another exemplary signal is an audio signal produced by a microphone (not illustrated) of the accessory that is input to the electronic device 10.

In one embodiment, and as illustrated in FIG. 2, the plug 16 may be a standard telephone plug, such as a 2.5 mm tip, ring and sleeve (TRS) connector (sometimes referred to as a subminiature telephone plug) or a 3.5 mm plug TRS connector (sometimes referred to as a miniature telephone plug). TRS connectors are cylindrical in shape and typically have three contacts 20 for stereo audio signals, or an audio signal and a microphone signal. The contacts 20 may be spaced apart by insulating rings. This type of telephone plug is sometimes referred to as a "tele-plug" or a "phone plug." It will be appreciated that other size connectors (e.g., 1/4 inch (6.3 mm) connector) and/or another number of contacts 20 may be employed. For example, the plug 16 may have two contacts 20 (e.g., a tip and sleeve (TS) connector) or, as illustrated in FIG. 2, the plug 16 may have four contacts 20 (e.g., a tip, ring, ring, and sleeve (TRRS) connector). In addition to or instead of a ground, an audio signal(s), and a microphone signal(s), contacts 20 may be used for video signals, the supply of power, etc. Also, other physical arrangements for the plug 16 and jack 18 may be possible. One of the contacts 20 may serve as a common ground for a speaker of the accessory 14 and a microphone of the accessory 14. In a typical arrangement, the plug 16 may be connected to a body of the accessory 14 that houses various electronic components by a set of conductors 22 that correspond to the contacts 20. As will be appreciated, the jack 18 has contacts for establishing electrical connection with the contacts of the plug 16. The jack 18 of the illustrated embodiment is sometimes referred to as a "phone jack" or a "telephone jack."

The electronic device 10 may include an interface circuit 24 that couples other components of the electronic 10, and signals to and from those components, to the jack 18. Other input/output (I/O) interfaces may be present, such as a power connector 26 to connect a power supply to the electronic device 10 to supply operating power to the electronic device 10 via a power supply unit (PSU) 28 and/or charge a battery of the PSU 28 that powers the electronic device 10 in the absence of another power source. Another I/O interface may be a USB connector 30 and associated USB controller 32. Another I/O interface may be a proprietary connector and interface controller, which are not shown in the illustrated embodiment.

The accessory 14 may be any type of accessory. Exemplary accessories include, but are not limited to, a personal handsfree (PHF) device (e.g., a headset with one or more speakers and one or more microphones to facilitate voice communications without having to hold the electronic device to the user's head), headphones or ear-buds, a music desk stand, a car holder, a speaker or speakers, etc.

Additional details and operation of the accessory discovery function 12 will be described in greater detail below. The accessory discovery function 12 may be embodied as executable code that is resident in and executed by the electronic device 10. In one embodiment, the accessory discovery function 12 may be a program stored on a computer or machine readable medium. The accessory discovery function 12 may be a stand-alone software application or form a part of a software application that carries out additional tasks related to the electronic device 10. It will be apparent to a person having ordinary skill in the art of computer programming, and specifically in application programming for mobile telephones or other electronic devices, how to program a electronic device 10 to operate and carry out logical functions associated with the accessory discovery function 12. Accordingly, details as to specific programming code have been left out for the sake of brevity. Also, while the accessory discovery function 12 is described as being embodied by executable code, such functionality could also be carried out via dedicated hardware or firmware, or some combination of hardware, firmware and/or software.

It will be further appreciated that the accessory 14 may include a circuit (not shown) that carries out functionality that coordinates with the functionality of the accessory discovery function 12. The functionality of the accessory 14 to exchange device-related information with the electronic device 10 may be implemented in any suitable manner, including in hardware, in firmware, in software or some combination of hardware, firmware and/or software.

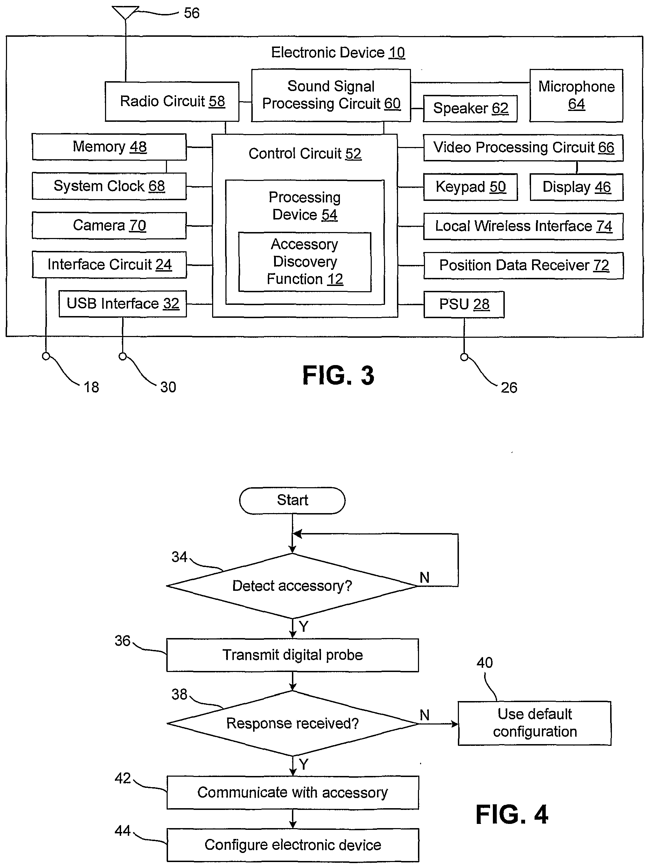

With additional reference to FIG. 4, illustrated are logical operations to implement an exemplary method of determining information about the accessory 14 and adjusting settings of the electronic device 10 based on the information. The accessory 14 also may determine information about the electronic device 10 and adjust settings of the accessory 14 based on the information received from the electronic device 10.

The exemplary method may be carried out by executing an embodiment of the accessory discovery function 12, for example. Thus, the flow chart of FIG. 4 may be thought of as depicting steps of a method carried out by the electronic device 10. Although FIG. 4 shows a specific order of executing functional logic blocks, the order of executing the blocks may be changed relative to the order shown. Also, two or more blocks shown in succession may be executed concurrently or with partial concurrence. Certain blocks also may be omitted.

The logical flow may start in block 34 where a determination is made as to whether an accessory 34 has been physically connected to the electronic device 10 by insertion of the plug 16 into the jack 18. The detection may be made by the opening or closing of a switch component of the jack 18, by a change in electrical properties across contacts of the jack 18, or other sensing of the plug 16. If an accessory 34 has not been connected, a negative determination may be made and the logic flow may wait for a positive determination.

If an accessory 14 has been connected to the electronic device 10, a positive determination may be made in block 34 and the logical flow may proceed to block 36. In block 36, a probe may be transmitted from the electronic device 10 to the accessory 14 by way of the jack 18 and inserted plug 16. The probe may be a digital data signal having a sequence of bits that are detectable by the accessory 14, provided the accessory 14 has functionality to detect and respond to the probe. In one embodiment, two or more of the contacts 20 may be selected and the probe may be transmitted using the selected contacts 20 as a carrier for signal.

Next, in block 38, a determination may be made as to whether the accessory 14 responds to the probe. The response may be in the form of a return digital transmission in an expected format. If no response is received, a conclusion may be made that the accessory 14 is not compatible with the protocol of the accessory discovery function 12. In this case, a negative determination may be made in block 38 and the logical flow may proceed to block 40. In block 40, the electronic device 10 may use default settings to interact with the accessory 14, such as a predetermined volume setting, a predetermined channel arrangement, etc.

If, in block 38, a response is received in block 38, a conclusion may be made that the accessory 14 is compatible with the information exchange of the accessory discovery function 12. In this case, a positive determination may be made in block 38 and the logical flow may proceed to block 42. In block 42, the electronic device 10 and the accessory 14 may carry out a digital data exchange. During the exchange, information about the type of accessory 14 and functions that the accessory 14 supports may be communicated to the electronic device 10. Also, in one embodiment, information about the type of electronic device 10 and functions that the electronic device 10 supports may be communicated to the accessory 14. The data exchange may occur in any appropriate manner. For instance, a packet of packets of information may be transmitted in a predetermined format to communicate various items of information, such as accessory type (e.g., the identity of an accessory category from a standard list of accessory categories), an accessory manufacturer, a unique accessory identifier, an accessory model number or model class, a list of functions supported, preferred settings for the electronic device, and so forth.

In another embodiment, the data transfer may include sending polls for information from the electronic device 10 to the accessory 14 where each poll requests an item or items of information. The accessory 14 may send a response to each poll to satisfy the query contained in the poll. Subsequent polls may be based on information contained in the responses to the earlier polls. In this manner, the data exchange may follow a logical hierarchy of progressively more specific polls for the particular accessory 14. In addition to polls, the data transfer may include commands, such as a command to turn on or turn off a particular function, or to adjust a setting to a particular value or operational state. The commands may be based on information received from the accessory 14. In addition to polls and/or commands, the electronic device 10 may provide information about the electronic device 10 (e.g., model or model class, manufacturer, etc.) and/or functions supported by the electronic device 10 to the accessory 14. The information that is provided may be based on information received from the accessory.

In another embodiment, the some or all of the data exchange described in connection with block 42 may be merged into the initial probe of block 36 and/or response of block 38.

Following block 42, the logical flow may proceed to block 44 where the electronic device 10 configures itself for the accessory 14 based on the information obtained in the earlier steps. For instance, volume settings or other sound output settings may be adjusted for the type of accessory 14 that has been connected to the electronic device 10. As another example, a channel that is associated with a pair of the contacts 20 may be set to be an audio input channel, an audio output channel, a video channel, a power supply channel or a data channel. Also, the accessory 14 may carry out similar configuration functions based on information or commands received from the electronic device 10. In another embodiment, software and/or other data (e.g., parameter values, data files, etc.) may be transferred from one of the electronic device 10 or the accessory 14 to the other of the devices. For instance, the accessory 14 have store software for execution by the electronic device 10 and/or a data file(s) for use by the electronic device 10 to optimize interaction with the accessory 14.

In one embodiment, the user may establish a profile of settings for a particular accessory 14 that he or she may use frequently. The data exchange may result in a determination that the user has connected this specific accessory and the electronic device 10 may adjust various settings of the electronic device 10 based on the established profile. Also, the electronic device 10 may transmit commands to the accessory 14 so that the accessory 14 adjust its settings based on the profile.

It is contemplated that the data exchange will last for a very short period of time, such as up to three seconds, and in many cases, less than three seconds, such less than about two seconds, less than about one second, or less than about 0.5 seconds. Longer time periods are contemplated, especially if the physical interface does not allow for a relatively high digital data transfer rate or if a large amount is to be transferred (e.g., in the case of a software or data transfer). Therefore, the method of accessory type determination includes digitally communicating with the accessory 14 to exchange data for a short period of time over an interface normally intended for analog signals. Following the data exchange, the use of the connection over the plug 16 and jack 18 may return to an analog format as would normally be expected over such an interface.

It is further contemplated that the foregoing technique for exchanging information between an electronic device and an accessory will be of value for mobile telephones constructed in accordance with standards for interfaces established by China and other countries. For instance, one standard established by China places strict guidelines on the nature of I/O interfaces. For example, the Chinese standard eliminates the use of proprietary connectors and requires use of a standard power supply connector, a USB interface and a TRS connector. The standard further limits the manner in which these interfaces may be employed.

With continued reference to FIGs. 1 through 3, aspects of the electronic device when in the form of a mobile telephone will be described in greater detail. The electronic device 10 is shown as having a "brick" or "block" form factor housing, but it will be appreciated that other housing types may be utilized, such as a "flip-open" form factor (e.g., a "clamshell" housing), a slide-type form factor (e.g., a "slider" housing) or a pivoting form factor. In the illustrated embodiment, the jack 18, the USB port 30 and the power supply jack 26 are on a bottom of the electronic device 10. In other embodiments, some or all of these I/O interfaces may be located on another surface of the electronic device 10, such a side of the electronic device 10.

The electronic device 10 may include a display 46. The display 46 displays information to a user such as operating state, time, telephone numbers, contact information, various menus, etc., that enable the user to utilize the various features of the electronic device 10. The display 46 also may be used to visually display content received by the electronic device 10 and/or retrieved from a memory 48 (FIG. 3) of the electronic device 10. The display 46 may be used to present images, video and other graphics to the user, such as photographs, mobile television content and video associated with games.

A keypad 50 provides for a variety of user input operations. For example, the keypad 50 may include alphanumeric keys for allowing entry of alphanumeric information such as telephone numbers, phone lists, contact information, notes, text, etc. In addition, the keypad 50 may include special function keys such as a "call send" key for initiating or answering a call, and a "call end" key for ending or "hanging up" a call. Special function keys also may include menu navigation and select keys to facilitate navigating through a menu displayed on the display 46. For instance, a pointing device and/or navigation keys may be present to accept directional inputs from a user. Special function keys may include audiovisual content playback keys to start, stop and pause playback, skip or repeat tracks, and so forth. Other keys associated with the mobile telephone may include a volume key, an audio mute key, an on/off power key, a web browser launch key, a camera key, etc. Keys or key-like functionality also may be embodied as a touch screen associated with the display 46. Also, the display 46 and the keypad 50 may be used in conjunction with one another to implement soft key functionality.

The electronic device 10 includes call circuitry that enables the electronic device 10 to establish a call and/or exchange signals with a called/calling device, which typically may be another mobile telephone or landline telephone. However, the called/calling device need not be another telephone, but may be some other device such as an Internet web server, content providing server, etc. Calls may take any suitable form. For example, the call could be a conventional call that is established over a cellular circuit-switched network or a voice over Internet Protocol (VoIP) call that is established over a packet-switched capability of a cellular network or over an alternative packet-switched network, such as WiFi (e.g., a network based on the IEEE 802.11 standard), WiMax (e.g., a network based on the IEEE 802.16 standard), etc. Another example includes a video enabled call that is established over a cellular or alternative network.

The electronic device 10 may be configured to transmit, receive and/or process data, such as text messages, instant messages, electronic mail messages, multimedia messages, image files, video files, audio files, ring tones, streaming audio, streaming video, data feeds (including podcasts and really simple syndication (RSS) data feeds), and so forth. It is noted that a text message is commonly referred to by some as "an SMS," which stands for simple message service. SMS is a typical standard for exchanging text messages. Similarly, a multimedia message is commonly referred to by some as "an MMS," which stands for multimedia message service. MMS is a typical standard for exchanging multimedia messages. Processing data may include storing the data in the memory 48, executing applications to allow user interaction with the data, displaying video and/or image content associated with the data, outputting audio sounds associated with the data, and so forth.

FIG. 2 represents a functional block diagram of the electronic device 10. For the sake of brevity, many features of the electronic device 10 will not be described in great detail. The electronic device 10 includes a primary control circuit 52 that is configured to carry out overall control of the functions and operations of the electronic device 10. The control circuit 52 may include a processing device 54, such as a central processing unit (CPU), microcontroller or microprocessor. The processing device 54 executes code stored in a memory (not shown) within the control circuit 52 and/or in a separate memory, such as the memory 48, in order to carry out operation of the electronic device 10. For example, the processing device 54 may execute code that implements the accessory discovery function 12.

The memory 48 may be, for example, one or more of a buffer, a flash memory, a hard drive, a removable media, a volatile memory, a non-volatile memory, a random access memory (RAM), or other suitable device. In a typical arrangement, the memory 48 may include a non-volatile memory (e.g., a NAND or NOR architecture flash memory) for long term data storage and a volatile memory that functions as system memory for the control circuit 52. The volatile memory may be a RAM implemented with synchronous dynamic random access memory (SDRAM), for example. The memory 48 may exchange data with the control circuit 52 over a data bus. Accompanying control lines and an address bus between the memory 48 and the control circuit 52 also may be present.

Continuing to refer to FIGs. 1 and 2, the electronic device 10 includes an antenna 56 coupled to a radio circuit 58. The radio circuit 58 includes a radio frequency transmitter and receiver for transmitting and receiving signals via the antenna 56. The radio circuit 58 may be configured to operate in a mobile communications system and may be used to send and receive data and/or audiovisual content. Receiver types for interaction with a mobile radio network and/or broadcasting network include, but are not limited to, global system for mobile communications (GSM), code division multiple access (CDMA), wideband CDMA (WCDMA), general packet radio service (GPRS), WiFi, WiMax, digital video broadcasting-handheld (DVB-H), integrated services digital broadcasting (ISDB), etc., as well as advanced versions of these standards. It will be appreciated that the antenna 56 and the radio circuit 58 may represent one or more than one radio transceiver.

The electronic device 10 further includes a sound signal processing circuit 60 for processing audio signals transmitted by and received from the radio circuit 58. Coupled to the sound processing circuit 60 are a speaker 62 and a microphone 64 that enable a user to listen and speak via the electronic device 10. The radio circuit 58 and sound processing circuit 60 are each coupled to the control circuit 52 so as to carry out overall operation. Audio data may be passed from the control circuit 52 to the sound signal processing circuit 60 for playback to the user. The audio data may include, for example, audio data from an audio file stored by the memory 48 and retrieved by the control circuit 52, or received audio data such as in the form of streaming audio data from a mobile radio service. The sound processing circuit 60 may include any appropriate buffers, decoders, amplifiers and so forth.

The display 46 may be coupled to the control circuit 52 by a video processing circuit 66 that converts video data to a video signal used to drive the display 46. The video processing circuit 66 may include any appropriate buffers, decoders, video data processors and so forth. The video data may be generated by the control circuit 52, retrieved from a video file that is stored in the memory 48, derived from an incoming video data stream that is received by the radio circuit 58 or obtained by any other suitable method.

The electronic device 10 also may include a system clock 68 for clocking the various components of the electronic device 10, such as the control circuit 52 and the memory 48.

The electronic device 10 may include a camera 70 for taking digital pictures and/or movies. Image and/or video files corresponding to the pictures and/or movies may be stored in the memory 48.

The electronic device 10 also may include a position data receiver 72, such as a global positioning system (GPS) receiver, Galileo satellite system receiver or the like. The position data receiver 72 may be involved in determining the location of the electronic device 10.

The electronic device 10 also may include a local wireless interface 74, such as an infrared transceiver and/or an RF interface (e.g., a Bluetooth interface), for establishing communication with an accessory, another mobile radio terminal, a computer or another device. For example, the local wireless interface 74 may operatively couple the electronic device 10 to a headset assembly (e.g., a PHF device) in an embodiment where the headset assembly has a corresponding wireless interface.

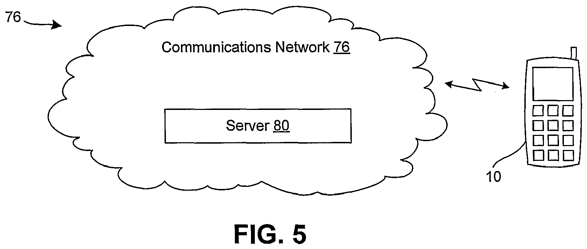

With additional reference to FIG. 5, the electronic device 10 may be configured to operate as part of a communications system 76. The system 76 may include a communications network 78 having a server 80 (or servers) for managing calls placed by and destined to the electronic device 10, transmitting data to the electronic device 10 and carrying out any other support functions. The server 80 communicates with the electronic device 10 via a transmission medium. The transmission medium may be any appropriate device or assembly, including, for example, a communications tower (e.g., a cell tower), another mobile telephone, a wireless access point, a satellite, etc. Portions of the network may include wireless transmission pathways. The network 78 may support the communications activity of multiple mobile telephones 10 and other types of end user devices. As will be appreciated, the server 80 may be configured as a typical computer system used to carry out server functions and may include a processor configured to execute software containing logical instructions that embody the functions of the server 80 and a memory to store such software.

Although certain embodiments have been shown and described, it is understood that modifications falling within the scope of the appended claims will occur to others who are skilled in the art upon the reading and understanding of this specification.

## Claims

1. A method of determining a characteristic of an accessory (14) with an electronic device (10), comprising:
upon the establishment of a physical and electrical connection between a plug (16) of the accessory and a jack (18) of the electronic device, establishing a digital communication with the accessory through contacts of the plug and, as part of the digital communication, the accessory identifying the characteristic to the electronic device;
changing a setting of the electronic device in accordance with the characteristic; and
following the digital communication, transmitting an analog audio signal over the physical electrical connection between the contacts of the plug and the jack from one of the electronic device or the accessory to the other of the electronic device or the accessory.

2. The method of claim 1, wherein the plug (16) and the jack (18) are respectively a telephone plug (16) and a telephone jack (18) intended for use in conveying analog signals, and wherein the plug (16) is a cylindrical telephone plug with a tip contact, at least one ring contact and a sleeve contact.

3. The method of any one of claims 1-2, wherein the characteristic is at least one of an accessory type, an accessory manufacturer, an accessory identifier, an accessory model identifier, a function supported by the accessory (14), or a setting of the electronic device (10) preferred by the accessory (14).

4. The method of any one of claims 1-3, wherein the digital communication includes:
transmitting a poll for the characteristic; and
receiving a response to the poll from the accessory (14).

5. The method of any one of claims 1-4, wherein the digital communication includes transmitting a probe seeking a compatibility response from the accessory (14) and receiving a compatibility response from the accessory (14).

6. The method of any one of claims 1-5, further comprising receiving software for execution by the electronic device (10) from the accessory (14) over the connection.

7. The method of any one of claims 1-6, wherein changing the setting includes adjusting settings of the electronic device (10) based on a user established profile for the accessory (14).

8. The method of any one of claims 1-7, wherein the digital communication lasts less than three seconds.

9. An electronic device (10), comprising:
a jack (18) configured to establish a physical and electrical connection with contacts (20) of a plug (16) of an accessory (14); and
a control circuit (52) configured to determine a characteristic of the accessory by establishing a digital communication with the accessory over the connection between the plug and the jack, and following the receipt of the characteristic from the accessory, change a setting of the electronic device in accordance with the characteristic and control the transmission of an analog signal over the contacts of the plug used for the connection.

10. The electronic device of claim 9, wherein the plug (16) and the jack (18) are respectively a telephone plug (16) and a telephone jack (18) intended for use in conveying analog signals, and wherein the plug (16) is a cylindrical telephone plug with a tip contact, at least one ring contact and a sleeve contact.

11. The electronic device of any one of claims 9-10, wherein the characteristic is at least one of an accessory type, an accessory manufacturer, an accessory identifier, an accessory model identifier, a function supported by the accessory (14), or a setting of the electronic device (10) preferred by the accessory (14).

12. The electronic device of any one of claims 9-11, wherein the digital communication includes a transmission of a poll for the characteristic from the electronic device (10) and a receipt of a response to the poll from the accessory (14).

13. The electronic device of any one of claims 9-12, wherein the digital communication includes a transmission of a probe seeking a compatibility response from the accessory (14) and a receipt of a compatibility response from the accessory (14).

14. The electronic device of any one of claims 9-13, wherein changing the setting includes adjusting settings of the electronic device (10) based on a user established profile for the accessory (14).

15. An accessory (14) for an electronic device (10), comprising:
a plug (16) for establishing a connection with a jack (18) of the electronic device, wherein the plug is a cylindrical telephone plug with a tip contact and is adapted to establish the connection with the tip contact, at least one ring contact and a sleeve contact, the contacts of the plug being adapted to exchange analog audio signals with the electronic device; and
a circuit configured to respond to a digital communication from the electronic device that is received over the connection with a digital response that includes a characteristic of the accessory.

## Patentansprüche

1. Ein Verfahren zum Bestimmen einer Eigenart eines Zubehörs (14) mittels einer elektronischen Vorrichtung (10), umfassend:
bei dem Aufbau einer physikalischen und elektrischen Verbindung zwischen einem Stecker (16) des Zubehörs und einer Buchse (18) der elektronischen Vorrichtung, Aufbau einer digitalen Kommunikation mit dem Zubehör durch Kontakte des Steckers und wobei das Zubehör die Eigenart der elektronischen Vorrichtung als Teil der digitalen Kommunikation identifiziert;
Ändern einer Einstellung der elektronischen Vorrichtung in Übereinstimmung mit der Eigenart; und
nach der digitalen Kommunikation, Übertragen eines analogen Audiosignals über die physikalisch-elektrische Verbindung zwischen den Kontakten des Steckers und der Buchse von einem aus der elektronischen Vorrichtung oder dem Zubehör zu dem anderen aus der elektronischen Vorrichtung oder dem Zubehör.

2. Das Verfahren gemäß Anspruch 1, wobei der Stecker (16) und die Buchse (18) jeweils ein für eine Nutzung bei einem Übermitteln analoger Signale vorgesehener Telefonstecker (16) und eine Telefonbuchse (18) sind, und wobei der Stecker (16) ein zylindrischer Telefonstecker mit einem Spitzenkontakt, zumindest einem Ringkontakt und einem Hülsenkontakt ist.

3. Das Verfahren gemäß einem jeden der Ansprüche 1-2, wobei die Eigenart zumindest eines aus einem Zubehörtyp, einem Zubehörhersteller, einer Zubehörkennung, einer Zubehörmodellkennung, einer durch das Zubehör (14) unterstützte Funktion, oder einer von dem Zubehör (14) bevorzugten Einstellung der elektronischen Vorrichtung (10) ist.

4. Das Verfahren gemäß einem jeden der Ansprüche 1-3, wobei die digitale Kommunikation aufweist:
Übertragen einer Abfrage nach der Eigenart; und
Empfangen einer Antwort auf die Abfrage von dem Zubehör (14).

5. Das Verfahren gemäß einem jeden der Ansprüche 1-4, wobei die digitale Kommunikation ein Übertragen eines um eine Kompatibilitätsantwort von dem Zubehör (14) bemühten Prüfsignals und ein Empfangen einer Kompatibilitätsantwort von dem Zubehör (14) aufweist.

6. Das Verfahren gemäß einem jeden der Ansprüche 1-5, ferner umfassend ein Empfangen einer Software zum Ausführen durch die elektronische Vorrichtung (10) von dem Zubehör (14) über die Verbindung.

7. Das Verfahren gemäß einem jeden der Ansprüche 1-6, wobei ein Ändern der Einstellung ein Anpassen von Einstellungen der elektronischen Vorrichtung (10) auf Grundlage eines nutzererstellten Profils für das Zubehör (14) aufweist.

8. Das Verfahren gemäß einem jeden der Ansprüche 1-7, wobei die digitale Kommunikation weniger als drei Sekunden andauert.

9. Eine elektronische Vorrichtung (10), umfassend:
eine Buchse (18), welche dazu eingerichtet ist, eine physikalische und elektrische Verbindung mit Kontakten (20) eines Steckers (16) eines Zubehörs (14) aufzubauen; und
ein Steuerschaltkreis (52), welcher dazu eingerichtet ist, eine Eigenart des Zubehörs durch Aufbau einer digitalen Kommunikation mit dem Zubehör über die Verbindung zwischen dem Stecker und der Buchse zu bestimmen, und nach dem Empfang der Eigenart von dem Zubehör eine Einstellung der elektronischen Vorrichtung in Übereinstimmung mit der Eigenart zu verändern und die Übertragung eines analogen Signals über die Kontakte der für die Verbindung genutzte Buchse zu steuern.

10. Die elektronische Vorrichtung gemäß Anspruch 9, wobei der Stecker (16) und die Buchse (18) jeweils ein für eine Nutzung bei einem Übermitteln analoger Signale vorgesehener Telefonstecker (16) und eine Telefonbuchse (18) sind, und wobei der Stecker (16) ein zylindrischer Telefonstecker mit einem Spitzenkontakt, zumindest einem Ringkontakt und einem Hülsenkontakt ist.

11. Die elektronische Vorrichtung gemäß einem jeden der Ansprüche 9-10, wobei die Eigenart zumindest eines aus einem Zubehörtyp, einem Zubehörhersteller, einer Zubehörkennung, einer Zubehörmodellkennung, einer durch das Zubehör (14) unterstützte Funktion, oder einer von dem Zubehör (14) bevorzugten Einstellung der elektronischen Vorrichtung (10) ist.

12. Die elektronische Vorrichtung gemäß einem jeden der Ansprüche 9-11, wobei die digitale Kommunikation eine Übertragung einer Abfrage nach der Eigenart von der elektronischen Vorrichtung (10) und einen Empfang einer Antwort auf die Abfrage von dem Zubehör (14) aufweist.

13. Die elektronische Vorrichtung gemäß einem jeden der Ansprüche 9-12, wobei die digitale Kommunikation eine Übertragung eines um eine Kompatibilitätsantwort von dem Zubehör (14) bemühten Prüfsignals und einen Empfang einer Kompatibilitätsantwort von dem Zubehör (14) aufweist.

14. Die elektronische Vorrichtung gemäß einem jeden der Ansprüche 9-13, wobei ein Ändern der Einstellung ein Anpassen von Einstellungen der elektronischen Vorrichtung (10) auf Grundlage eines nutzererstellten Profils für das Zubehör (14) aufweist.

15. Ein Zubehör (14) für eine elektronische Vorrichtung (10), umfassend:
einen Stecker (16) zum Aufbauen einer Verbindung mit einer Buchse (18) der elektronischen Vorrichtung, wobei der Stecker ein zylindrischer Telefonstecker mit einem Spitzenkontakt ist und dazu eingerichtet ist, die Verbindung mit dem Spitzenkontakt, zumindest einem Ringkontakt und einem Hülsenkontakt aufzubauen, wobei die Kontakte des Steckers dazu eingerichtet sind, analoge Audiosignale mit der elektronischen Vorrichtung auszutauschen; und
eine Schaltung, welche dazu eingerichtet ist, auf eine über die Verbindung von der elektronischen Vorrichtung empfangene digitale Kommunikation mit einer digitalen Antwort zu antworten, welche eine Eigenart des Zubehörs aufweist.

## Revendications

1. Procédé de détermination d'une caractéristique d'un accessoire (14) avec un dispositif électronique (10), comprenant les étapes consistant à :
lors de l'établissement d'une connexion physique et électrique entre une fiche (16) de l'accessoire et une prise (18) du dispositif électronique, établir une communication numérique avec l'accessoire à travers des contacts de la fiche et, en tant que partie de la communication numérique, identifier, par le biais de l'accessoire, la caractéristique au dispositif électronique ;
changer un réglage du dispositif électronique en fonction de la caractéristique ; et
après la communication numérique, transmettre un signal audio analogique sur la connexion électrique physique entre les contacts de la fiche et la prise à partir de l'un du dispositif électronique ou de l'accessoire à l'autre du dispositif électronique ou de l'accessoire.

2. Procédé de la revendication 1, dans lequel la fiche (16) et la prise (18) sont respectivement une fiche téléphonique (16) et une prise téléphonique (18) destinées à être utilisées dans le transport de signaux analogiques, et où la fiche (16) est une fiche téléphonique cylindrique avec un contact de pointe, au moins un contact annulaire et un contact de manchon.

3. Procédé de l'une quelconque des revendications 1 et 2, dans lequel la caractéristique est au moins l'un d'un type d'accessoire, d'un fabricant d'accessoire, d'un identifiant d'accessoire, d'un identifiant de modèle d'accessoire, d'une fonction assurée par l'accessoire (14), ou d'un réglage du dispositif électronique (10) préféré par l'accessoire (14).

4. Procédé de l'une quelconque des revendications 1 à 3, dans lequel la communication numérique comporte :
la transmission d'une interrogation pour la caractéristique ; et
la réception d'une réponse à l'interrogation à partir de l'accessoire (14).

5. Procédé de l'une quelconque des revendications 1 à 4, dans lequel la communication numérique comporte la transmission d'un sondage recherchant une réponse de compatibilité à partir de l'accessoire (14) et la réception d'une réponse de compatibilité à partir de l'accessoire (14) .

6. Procédé de l'une quelconque des revendications 1 à 5, comprenant en outre l'étape consistant à recevoir un logiciel à exécuter par le dispositif électronique (10) à partir de l'accessoire (14) sur la connexion.

7. Procédé de l'une quelconque des revendications 1 à 6, dans lequel le changement du réglage comporte l'ajustement de réglages du dispositif électronique (10) sur la base d'un profil établi par l'utilisateur pour l'accessoire (14).

8. Procédé de l'une quelconque des revendications 1 à 7, dans lequel la communication numérique dure moins de trois secondes.

9. Dispositif électronique (10), comprenant :
une prise (18) configurée pour établir une connexion physique et électrique avec des contacts (20) d'une fiche (16) d'un accessoire (14) ; et
un circuit de commande (52) configuré pour déterminer une caractéristique de l'accessoire en établissant une communication numérique avec l'accessoire sur la connexion entre la fiche et la prise, et après la réception de la caractéristique à partir de l'accessoire, pour changer un réglage du dispositif électronique en fonction de la caractéristique et pour commander la transmission d'un signal analogique sur les contacts de la fiche utilisée pour la connexion.

10. Dispositif électronique de la revendication 9, dans lequel la fiche (16) et la prise (18) sont respectivement une fiche téléphonique (16) et une prise téléphonique (18) destinées à être utilisées dans le transport de signaux analogiques, et où la fiche (16) est une fiche téléphonique cylindrique avec un contact de pointe, au moins un contact annulaire et un contact de manchon.

11. Dispositif électronique de l'une quelconque des revendications 9 et 10, dans lequel la caractéristique est au moins l'un d'un type d'accessoire, d'un fabricant d'accessoire, d'un identifiant d'accessoire, d'un identifiant de modèle d'accessoire, d'une fonction assurée par l'accessoire (14), ou d'un réglage du dispositif électronique (10) préféré par l'accessoire (14).

12. Dispositif électronique de l'une quelconque des revendications 9 à 11, dans lequel la communication numérique comporte une transmission d'une interrogation pour la caractéristique à partir du dispositif électronique (10) et une réception d'une réponse à l'interrogation à partir de l'accessoire (14).

13. Dispositif électronique de l'une quelconque des revendications 9 à 12, dans lequel la communication numérique comporte une transmission d'un sondage recherchant une réponse de compatibilité à partir de l'accessoire (14) et une réception d'une réponse de compatibilité à partir de l'accessoire (14).

14. Dispositif électronique de l'une quelconque des revendications 9 à 13, dans lequel le changement du réglage comporte l'ajustement de réglages du dispositif électronique (10) sur la base d'un profil établi par l'utilisateur pour l'accessoire (14).

15. Accessoire (14) pour un dispositif électronique (10), comprenant :
une fiche (16) pour établir une connexion avec une prise (18) du dispositif électronique, où la fiche est une fiche téléphonique cylindrique avec un contact de pointe et est adaptée pour établir la connexion avec le contact de pointe, au moins un contact annulaire et un contact de manchon, les contacts de la fiche étant adaptés pour échanger des signaux audio analogiques avec le dispositif électronique ; et
un circuit configuré pour répondre à une communication numérique provenant du dispositif électronique qui est reçue sur la connexion avec une réponse numérique qui comporte une caractéristique de l'accessoire.
